(19) **Europäisches Patentamt European Patent Office Office européen des brevets**

(11) **EP 4 749 861 A1**

(12) **EUROPEAN PATENT APPLICATION**

(43) Date of publication:
27.05.2026 Bulletin 2026/22

(21) Application number: 25218719.0

(22) Date of filing: 26.11.2025

(51) International Patent Classification (IPC):
*H02H 9/02* (2006.01)    *H02H 3/00* (2006.01)

(52) Cooperative Patent Classification (CPC):
**H02H 9/025; H02H 3/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 26.11.2024 US 202418960357

(71) Applicant: ABB SCHWEIZ AG
5400 Baden (CH)

(72) Inventors:
• **CHAVAN, Govind**
  **Raleigh, 27606 (US)**
• **DONG, Zhou**
  **Raleigh, 27606 (US)**
• **CAIROLI, Pietro**
  **Raleigh, 27606 (US)**

(74) Representative: **Zimmermann & Partner Patentanwälte mbB**
**P.O. Box 330 920**
**80069 München (DE)**

(54) **ADAPTIVE CURRENT LIMITERS**

(57)    In one embodiment, an adaptive current limiter includes at least one solid-state switch, a voltage clamping circuit, a current sense circuit, and a control circuit. The solid-state switch is configured to selectively enable and disable a current path through the solid-state switch. The voltage clamping circuit is in parallel with the solid-state switch. The current sense circuit is configured to determine a magnitude of a fault current though the current path and a rate of change (di/dt) of the fault current. The control circuit is configured to operate the solid-state switch to selectively enable and disable the current path to maintain the magnitude of the fault current at $I_{peak}$ within an upper current band and the magnitude of the fault current at $I_{valley}$ within a lower current band, and modify the upper current band and/or the lower current band based on the di/dt of the fault current.

FIG. 1

EP 4 749 861 A1

**Description**

BACKGROUND

The field of the disclosure relates to fault current limiting (FCL) control, and more particularly, to FCL control in power distribution systems that present low inductances to a fault, which can result in high and variable di/dt fault currents.

FCL control is used to limit the average fault current to a constant level during a fault, but delays in the control circuits may cause the instantaneous fault current to rise above or fall below the upper and lower current control bands defined in a band-to-band FCL control strategy. This problem worsens as the di/dt of the fault current increases.

Based on the forgoing discussion, it therefore remains desirable to improve upon the operation and performance of FCL control, and in particular, to improve the operation and performance of FCL control for faults that exhibit high and variable di/dt currents.

BRIEF DESCRIPTION

In one embodiment, an adaptive current limiter for current limiting a fault current is provided. The adaptive current limiter includes at least one solid-state switch, a voltage clamping circuit, a current sense circuit, and a control circuit. The at least one solid-state switch is configured to selectively enable and disable a current path through the at least one solid-state switch. The voltage clamping circuit is in parallel with the at least one solid-state switch. The current sense circuit is configured to determine a magnitude of the fault current though the current path and a rate of change (di/dt) of the fault current. The control circuit is coupled with the current sense circuit and the at least one solid-state switch and is configured to operate the at least one solid-state switch to selectively enable and disable the current path to maintain the magnitude of the fault current at $I_{peak}$ within an upper current band and the magnitude of the fault current at $I_{valley}$ within a lower current band, and modify the upper current band and/or the lower current band based on the di/dt of the fault current.

In another embodiment, a method operable by an adaptive current limiter for current limiting a fault current is provided. The adaptive current limiter includes at least one solid-state switch that is configured to selectively enable and disable a current path through the at least one solid-state switch, and a voltage clamping circuit in parallel with the at least one solid state switch. The method includes determining a magnitude of the fault current through the current path, determining a di/dt of the fault current, operating the at least one solid-state switch to selectively enable and disable the current path to maintain the magnitude of the fault current at $I_{peak}$ within an upper current band and the magnitude of the fault current at $I_{valley}$ within a lower current band, and modifying the upper current band and/or the lower current band based on the di/dt of the fault current.

In another embodiment, a system for current limiting a fault current is provided. The system includes a solid-state circuit breaker (SSCB) including at least one solid-state switch that is configured to selectively enable and disable a current path through the SSCB, and a voltage clamping circuit in parallel with the at least one solid-state switch. The system further includes a control circuit coupled with the SSCB and configured to operate the SSCB to selectively enable and disable the current path to maintain $I_{peak}$ of the fault current within an upper current band and $I_{valley}$ of the fault current within a lower current band, and modify the upper current band and/or the lower current band based on a di/dt of the fault current.

BRIEF DESCRIPTION OF DRAWINGS

These and other features, aspects, and advantages of the present disclosure will become better understood when the following detailed description is read with reference to the accompanying drawings in which like characters represent like parts throughout the drawings, wherein:

FIG. 1 depicts a graph of a fault current and control band variations due to delays in an exemplary embodiment.

FIG. 2 depicts a graph of a fault current and band-to-band current control in an exemplary embodiment.

FIGS. 3A and 3B depict graphs of an FCL control behavior under different fault conditions in an exemplary embodiment.

FIG. 4 depicts a block diagram of an adaptive current limiter for current limiting a fault current in another exemplary embodiment.

FIG. 5 depicts a block diagram of another adaptive current limiter for current limiting a fault current in another exemplary embodiment.

FIG. 6 depicts a block diagram of another adaptive current limiter for current limiting a fault current in another exemplary embodiment.

FIG. 7 depicts a flow chart of a method operable by an adaptive current limiter for current limiting a fault current in an exemplary embodiment.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the terms "processor" and "computer," and related terms, e.g., "processing device," "computing device," and "controller" are not limited to just those integrated circuits referred to in the art as a computer, but broadly refers to a microcontroller, a microcomputer, an analog computer, a programmable logic controller (PLC), an application specific integrated circuit (ASIC), and other programmable circuits, and these terms are used interchangeably herein. In the embodiments described herein, "memory" may include, but is not limited to, a computer-readable medium, such as a random-access memory (RAM), a computer-readable non-volatile medium, such as a flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a touchscreen, a mouse, and a keyboard. Alternatively, other computer peripherals may also be used that may include, for example, but not be limited to, a scanner. Furthermore, in the example embodiment, additional output channels may include, but not be limited to, an operator interface monitor or heads-up display. Some embodiments involve the use of one or more electronic or computing devices. Such devices typically include a processor, processing device, or controller, such as a general-purpose central processing unit (CPU), a graphics processing unit (GPU), a microcontroller, a reduced instruction set computer (RISC) processor, an ASIC, a programmable logic controller (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are not intended to limit in any way the definition and/or meaning of the term processor and processing device.

As discussed previously, FCL control is used to limit the average fault current to a constant level. However, propagation delays in the control circuit may cause the instantaneous fault current to rise above or fall below the upper and lower current control bands defined under the band-to-band current limiting control strategy. This effect worsens as the di/dt of the fault current increases, with the result being that the instantaneous fault current rises even farther above the upper current band and falls even lower below the lower current band defined in the band-to-band current limiting control strategy, which is undesirable.

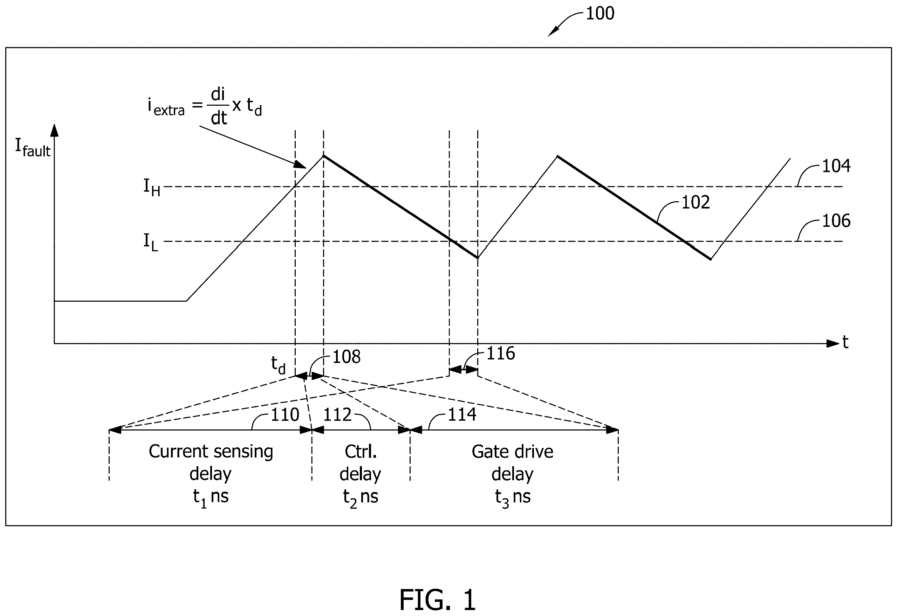

FIG. 1 depicts a graph 100 of a fault current 102 with FCL band variations due to delays in an exemplary embodiment. Band-to-band current limiting control is a control strategy used in power converters and a range of other power electronics applications. Band-to-band current limiting control aims to maintain the desired current at a constant average value over several switching cycles. Additionally, band-to-band current limiting control also aims to maintain the instantaneous value of this current between two bands such that the peak of the current stays within an upper current band 104 (shown as a line in this embodiment) and the valley of the current stays within a lower current band 106 (also shown as a line in this embodiment).

Band-to-band current limiting control faces unique challenges when it is used in fault current limiting applications. First, the di/dt of fault current 102 can vary substantially for each fault. This is because the di/dt of fault current 102 depends on the location of the fault, and as the fault location is an independent variable, the di/dt of fault current 102 itself is an independent variable to consider while designing an FCL controller. Second, the FCL controller is subjected to much higher di/dt values of fault current 102 than a regular current limiting control circuit used in converter applications, because the average current level being controlled by the FCL controller is much higher than that encountered during the normal operation of converters.

This problem is outlined in FIG. 1. For simplicity, consider the bands (i.e., upper current band 104 and lower current band 106) to be infinitesimally thin, i.e., just a line. $I_H$ represents the average value of upper current band 104 and $I_L$ represents the average value of lower current band 106.

The different delays shown in FIG. 1, i.e., $t_1$, $t_2$, $t_3$ can be combined into a single constant delay $t_d$ as

$$t_d = t_1 + t_2 + t_3 \qquad (1)$$

where $t_d$ 108 is a time delay before the current path through one or more solid-state switches conducting fault current 102 is disabled in response to the magnitude of fault current 102 exceeding $I_H$, $t_1$ 110 is a delay associated with the current sense circuit used to measure or calculate the magnitude of fault current 102, $t_2$ 112 is a delay associated with the control circuit itself, and $t_3$ 114 is a delay associated with the time needed to modify the conduction state of one or more solid-state switches that carry fault current 102.

With fault current 102 increasing and the magnitude of fault current 102 equal to $I_H$, time delay $t_d$ 108 before the current path through the solid-state switches is disabled causes fault current 102 to rise above $I_H$, which is undesirable. With fault current 102 decreasing and the magnitude of fault current 102 equal to $I_L$, time delay $t_d$ 116 before the current path through the solid-state switches is enabled causes fault current 102 to fall below $I_L$, which is also undesirable. Further, time delay $t_d$ 108 and time delay $t_d$ 116 may be different, due to differences in the sensing, control, and gate drive delays that vary depending on whether fault current 102 is increasing (with the solid-state switches conducting) or fault current 102 decreasing (with the solid-state switches not conducting). In addition, the di/dt of fault current 102 may be different depending on whether fault current 102 is increasing or decreasing.

In the embodiments described herein, adaptive upper and lower current control bands are used in a band-to-band current control scheme as a function of the di/dt of fault current 102. The di/dt of fault current 102 may be measured or calculated in different embodiments. In some embodiments, upper current band 104 is decreased in response to the di/dt of fault current 102 increasing and the di/dt of the fault current being positive. In other embodiments, lower current band 106 is increased in response to the di/dt of fault current decreasing and the di/dt of the fault current being negative.

For example, in a band-to-band current limiting control strategy, upper current band 104 may be initially set as a band of current having maximum value of 800 Amps (A) and lower current band 106 may be initially set as a band of current having an minimum value of 400 A. However, if the di/dt of fault current 102 is 1000 A/μs, then upper current band 104 may be reduced to 700 A in order to ensure that control delays do not allow the magnitude of fault current 102 to exceed the initial 800 A for the upper current band 104. If the di/dt of the fault current is -1000 A/s, then lower current band 106 maybe increased to 500 A in order to ensure that the control delays do not allow the magnitude of fault current 102 to fall below the initial 400 A minimum value.

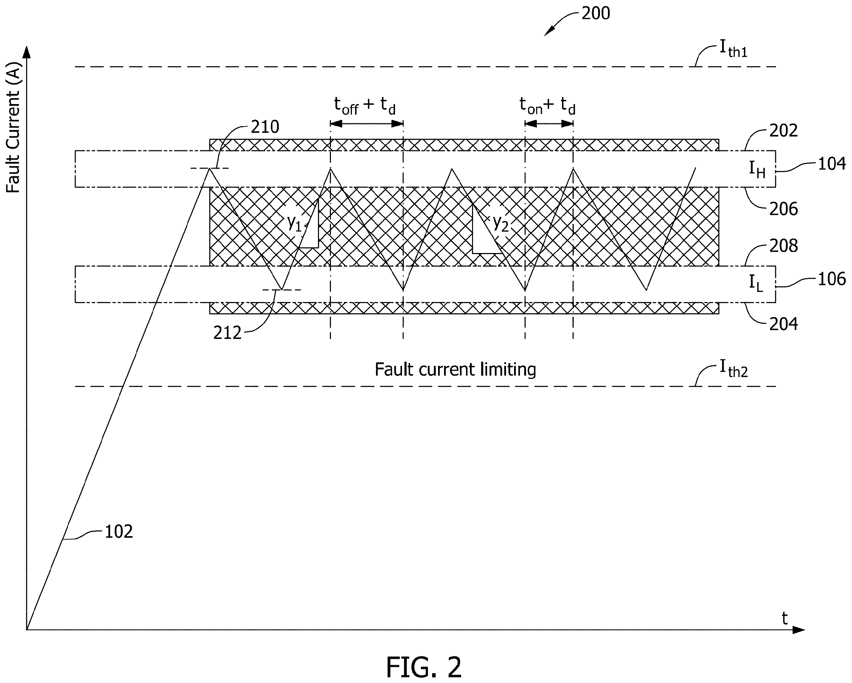

FIG. 2 depicts a graph 200 of fault current 102 and band-to-band current control in an exemplary embodiment. If $y_1$ is the rising di/dt of fault current 102 and $y_2$ is the falling di/dt of fault current 102 as indicated in FIG. 2, then the peak current $I_{peak}$ 210 and the valley current $I_{valley}$ 212 in a fault current limiting mode can be calculated as follows

$$I_{peak} = I_H + y_1 \times t_d$$
$$I_{valley} = I_L + y_2 \times t_d \qquad (2)$$

Because $y_2 < 0$, $I_{valley} < I_L$. Additionally, $y_1$ and $y_2$ are typically different for each fault event because they are driven by different physical processes. Thus if fixed control bands are initially chosen, there will be several situations, such as low fault inductance or low source capacitance, that maintaining $I_{peak}$ 210 and $I_{valley}$ 212 within upper current band 104 and lower current band 106 may be challenging.

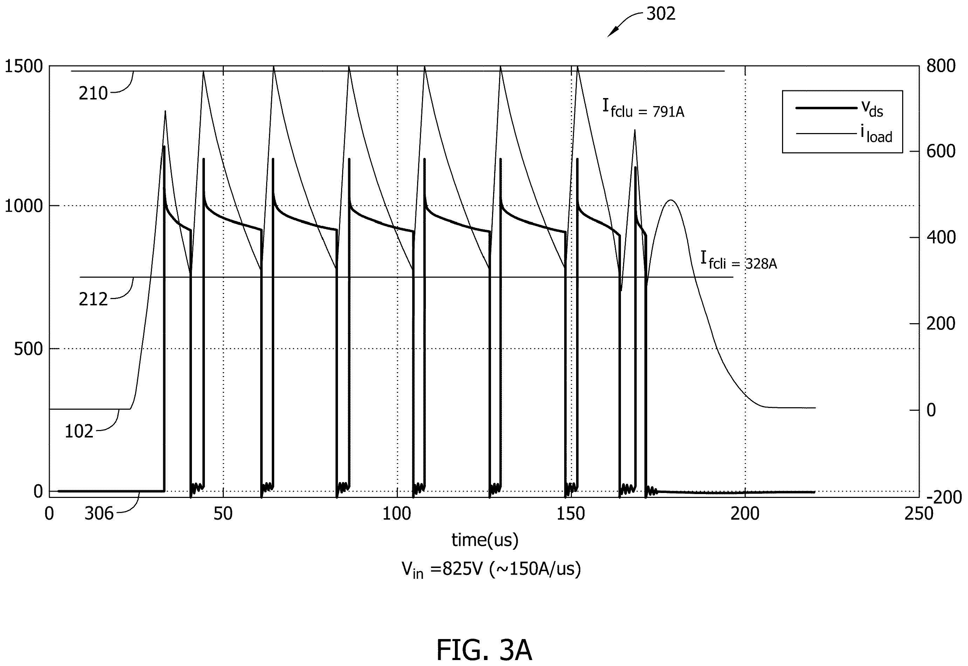

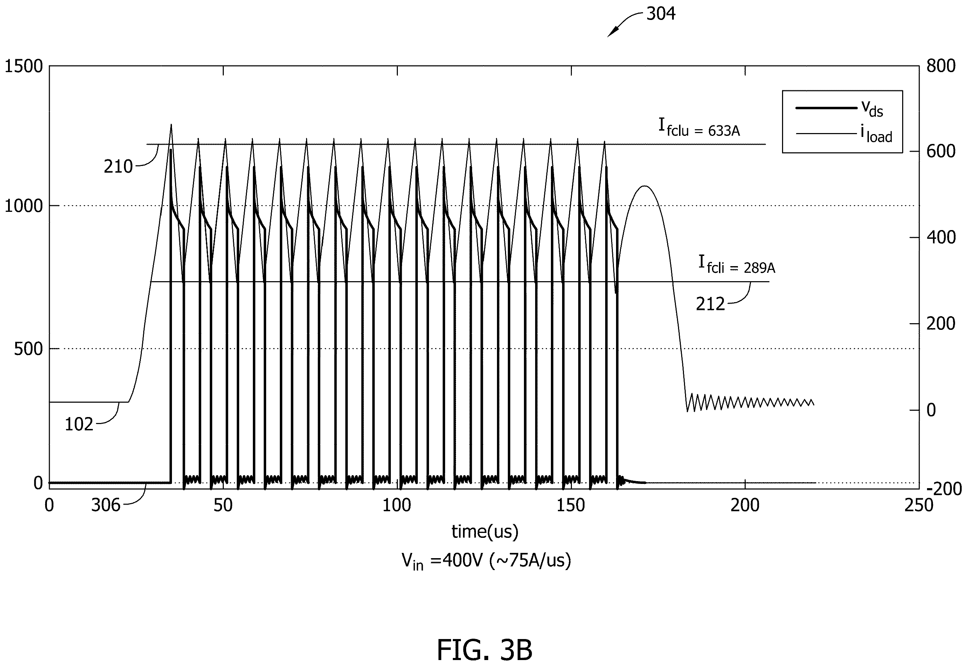

FIGS. 3A and 3B depict graphs 302, 304 of an FCL control behavior under different fault conditions in an exemplary embodiment. FIGS. 3A and 3B depict different fault conditions where an average of fault current 102 is significantly different depending on the fault location and a DC bus voltage. A much higher $I_{peak}$ 210 could exceed the safe operating area of the solid-state switches in a solid-state circuit breaker (SSCB), resulting in a device failure. Further, A much higher $I_{peak}$ 210 may cause an upstream SSCB to trip even while performing current limiting, which may interfere with protection coordination between upstream and downstream SSCBs. A much lower $I_{valley}$ 212 could result in insufficient current to trip a downstream circuit breaker for trip coordination.

Referring again to FIG. 2, let $t_{d1}$ be the time delay of the FCL controller when the di/dt of fault current 102 is $y_1$ A/μs and let $t_{d2}$ be the FCL controller's time delay when the di/dt of fault current 102 is $y_2$ A/μs. Let $\Delta I_H$ and $\Delta I_L$ be the width of the upper current band 104 and the lower current band 106, respectively. Let $I_H$ and $I_L$ be the average values of the upper current band 104 and the lower current band 106, respectively. The upper limit $I_{H_u}$ 202 of the upper current band 104 and the lower limit $I_{L_1}$ 204 of the lower band can then be written as

$$I_{H_u} = I_H + \frac{\Delta I_H}{2}$$
$$I_{L_1} = I_L - \frac{\Delta I_L}{2} \tag{3}$$

The objective of this solution is to ensure that $I_{peak} \leq I_{H_u}$ and $I_{valley} \geq I_{L_1}$. In the limiting case at maximum design di/dt, the inequalities convert to an equality. The FCL controller defines adjusted internal thresholds as

$$I_h = I_{H_u} - I(y_1, t_{d1})$$
$$I_l = I_{L_1} - I(y_2, t_{d2}) \tag{4}$$

$I(y, t_d)$ is a correction factor calculated as a function of the di/dt of fault current 102 and the control circuit delays. The correction factor is scaled in such a way that $I_{peak}$ 210 and $I_{valley}$ 212 currents always fall within the upper current band 104 and lower current band 106, respectively. As before, it is noted that since $y_2 < 0$, $I_l > I_{L_1}$. The rising di/dt $y_1$ may be measured using a di/dt sensor like a Rogowski coil or an inductor, or it may be calculated on the FCL controller itself using current measurements. The falling di/dt $y_2$ may also be measured during the first turn-off of the solid-state switches or alternately, it may be estimated during the initial fault if the DC bus voltage is known beforehand.

The equations defined in (4) are not the only way to implement adaptive control bands. Indeed, in the general form, (4) can be rewritten as

$$I_h \leq I_{H_u} - I(y_1, t_{d1})$$
$$I_l \geq I_{L_1} - I(y_2, t_{d2}) \tag{5}$$

The selected $I_h$ and $I_l$ from equation 5 also must ensure that the final $I_{peak}$ 210 and $I_{valley}$ 212 currents are within the control bands defined for the FCL controller. The $I_{peak}$ 210 and $I_{valley}$ 212 currents in this case will be

$$I_{peak} = I_h + I(y_1, t_{d1})$$
$$I_{valley} = I_l + I(y_2, t_{d2}) \tag{6}$$

If $I_{H_l}$ 206 is the lower limit of upper current band 104 and $I_{L_u}$ 208 is the upper limit of lower current band 106, then the $I_{peak}$ 210 and $I_{valley}$ 212 currents from (6) must satisfy the following conditions:

$$I_h \geq I_{H_l} - I(y_1, t_{d1})$$
$$I_l \leq I_{L_u} - I(y_2, t_{d2}) \tag{7}$$

Equations (5) and (7) combined complete the description for the adaptive FCL control bands.

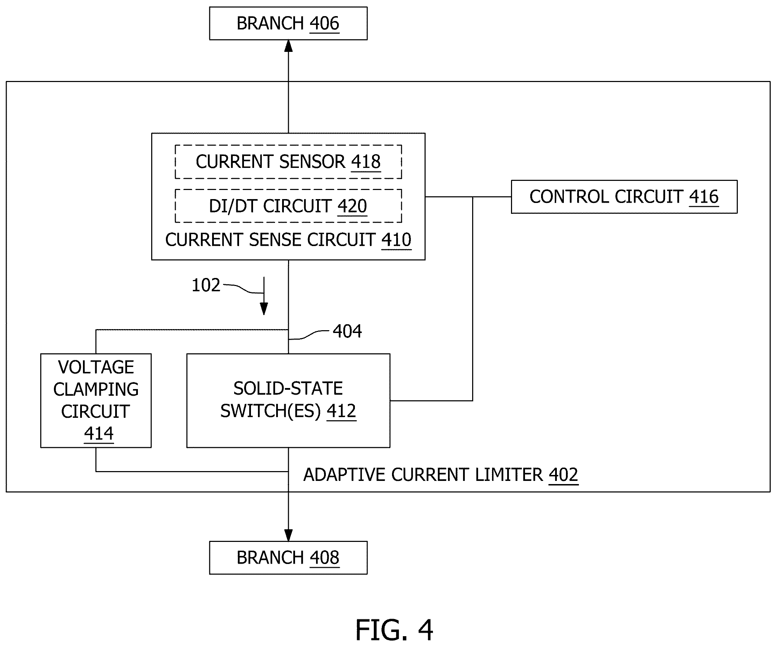

FIG. 4 depicts a block diagram of an adaptive current limiter 402 for current limiting a fault current in another exemplary embodiment. Adaptive current limiter 402 comprises any component, system, or device which performs the functions described herein for adaptive current limiter 402. Adaptive current limiter 402 will be described with respect to various discrete elements, which perform functions. These elements may be combined in different embodiments and/or segmented into different discrete elements in other embodiments.

In this embodiment, adaptive current limiter 402 selectively controls a current path 404 between different DC distribution branches 406, 408 of a power distribution system. DC distribution branches 406, 408 may be electrically coupled with sources, loads, or combinations of sources and loads. For example, DC distribution branches 406, 408 may be coupled to battery energy storage systems, which may switch between being a load (when charging the battery energy storage system) and being a source (when the battery energy storage system provides power to other DC distribution branches of the power distribution system.

In this embodiment, adaptive current limiter 402 comprises a current sense circuit 410 and solid-state switches 412 in current path 404. Current sense circuit 410 senses a current in current path 404. Current sense circuit 410 senses the magnitude of the current in current path 404 and a rate of change (di/dt) of the current in current path 404. Solid-state switches 412 selectively control whether current flows in current path 404. Solid-state switches 412 may comprise reverse-blocking integrated gate commutated thyristors (RB-IGCT) devices, asymmetric IGCT devices, silicon (SI) or silicon carbide (SiC) insulated-gate bipolar transistor (IGBT) devices, Si or SiC metal-oxide-semiconductor field-effect transistor (MOSFET) devices, Si or SiC junction-gate field-effect transistor (JFET) devices, SiC field-effect transistors (FET) devices, or other types of solid-state switches (and combinations thereof) in various embodiments.

In this embodiment, adaptive current limiter 402 includes a voltage clamping circuit 414 in parallel with solid-state switches 412, and a control circuit 416 that is coupled with current sense circuit 410 and solid-state switches 412. Generally, voltage clamping circuit 414 generates a counter voltage across solid-state switches 412 when solid-state switches 412 are off (e.g., fault current 102 is decreasing as shown in FIG. 2.). Control circuit 416 is configured to operate solid-state switches 412 to selectively enable and disable current path 404 to maintain $I_{peak}$ 210 of fault current within upper current band 104 and $I_{valley}$ 212 of fault current within lower current band 106 (see FIG. 2). Control circuit 416 is further configured to modify upper current band 104 and/or lower current band 106 (see e.g., FIG. 2) based on the di/dt of fault current 102, similar to previously described with respect to FIGS. 1, 2, 3A, and 3B. In some embodiments, control circuit 416 may be implemented using discrete circuits with comparators, and/or using digital control with microcontrollers that include fast response comparators functions.

Although fault current 102 is illustrated as having a direction, fault current 102 may have a different direction in other embodiments depending on whether DC distribution branches 406, 408 are sources or loads.

As discussed briefly above, current sense circuit 410 is configured to determine a magnitude of fault current 102 and a di/dt of fault current 102. In some embodiments, current sense circuit 410 includes a current sensor 418, which senses the magnitude of fault current 102 and provides this information to control circuit 416. In some embodiments, control circuit 416 may determine the di/dt of fault current 102 based on the output of current sensor 418. The di/dt measurement may be calculated from the current measurement itself using an analog or numerical differentiator circuit.

In some embodiments, current sense circuit 410 includes a di/dt circuit 420, which measures the di/dt of fault current 102 and provides this information to control circuit 416. For example, di/dt circuit 420 may utilize a Rogowski coil, a voltage across an inductor, or other types of di/dt measuring devices to measure the di/dt of fault current 102.

In some embodiments, control circuit 416 may modify upper current band 104 and/or lower current band 106 based on a correction factor. In some embodiments, the correction factor is based on a time delay associated with an operation of control circuit 416 to maintain the $I_{peak}$ 210 of fault current 102 within upper current band 104 and $I_{valley}$ 212 of fault current 102 within lower current band 106.

In some embodiments, the correction factor is a multiplication of the di/dt measurement of fault current 102 and a delay value associated with an operation of control circuit 416 to maintain the $I_{peak}$ 210 of fault current 102 within upper current band 104 and $I_{valley}$ 212 of fault current 102 within lower current band 106. In some embodiments, the delay may be a constant value, or it may be adjusted as the di/dt of fault current 102 changes. In some embodiments, the correction factor is a complex function of the di/dt of fault current 102 and it may be difficult to define a singular delay variable. In these embodiments, upper current band 104 and/or lower current band 106 may be increased or decreased as a function of the di/dt of fault current 102, between the gap of $I_{th_1}$ and $I_{th_2}$ (see FIG. 2) to allow for situations where the correction factor is unable to fully compensate for the delays in the operation of control circuit 416 to maintain the $I_{peak}$ 210 of fault current 102 within upper current band 104 and $I_{valley}$ 212 of fault current 102 within lower current band 106.

In some embodiments, control circuit 416 is configured to increase and decrease upper current band 104 and/or lower current band 106 based on other criteria, such as an average value of fault current 102. In these embodiments, control circuit 416 calculates an average value of the magnitude of fault current 102, output, for example, by current sense circuit 410, determine a difference between the average value and a target average value of the magnitude of fault current 102, and modify upper current band 104 and/or lower current band 106 to reduce the difference. This ensures that the average value of the magnitude of fault current 102 more closely tracks the target average value.

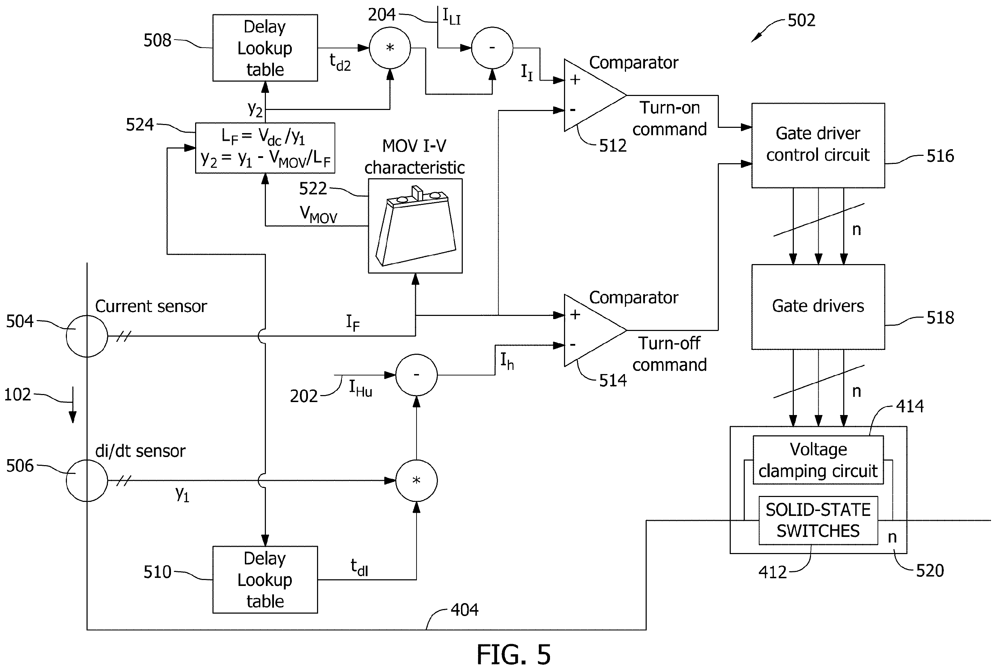

FIG. 5 depicts a block diagram of another adaptive current limiter 502 for current limiting fault current 102 in another exemplary embodiment. In this embodiment, adaptive current limiter 502 includes a current sensor 504, which may operate similarly to current sensor 418 of FIG. 2. Adaptive current limiter 502 further includes a di/dt sensor 506, which may operate similarly to di/dt circuit 420 of FIG. 2. Adaptive current limiter 502 further includes delay lookup tables 508, 510, comparators 512, 514, a gate driver control circuit 516, gate drivers 518, and SSCB 520. Block 522 is the MOV I-V characteristics ($V_{MOV}$), associated with solid-state switches 412, based on fault current 102, and block 524 calculates the inductance of the fault $L_F$ based on the voltage of the faulted DC branch 406, 408 ($V_{DC}$), and $y_1$, where $y_1$ is output by di/dt sensor 506. Block 524 outputs $y_2$. $Y_1$ is used as an input to delay lookup table 510, and comparator 514 is used to generate a turn-off command for gate driver control circuit 516. $Y_2$ is used as an input to delay lookup table 508, and comparator 512 is used to generate a turn-on command for gate driver control circuit 516. Delay lookup table 508 uses $y_2$ as an input, and estimates the turn-on delay based on $y_2$. Delay lookup table 510 uses $y_1$ as an input, and estimates the turn-off delay based on $y_1$. Adaptive current limiter 502 operates similarly to adaptive current limiter 402 to ensure that $I_{peak}$ 210 falls within upper current band 104 and $I_{valley}$ falls within lower current band 106.

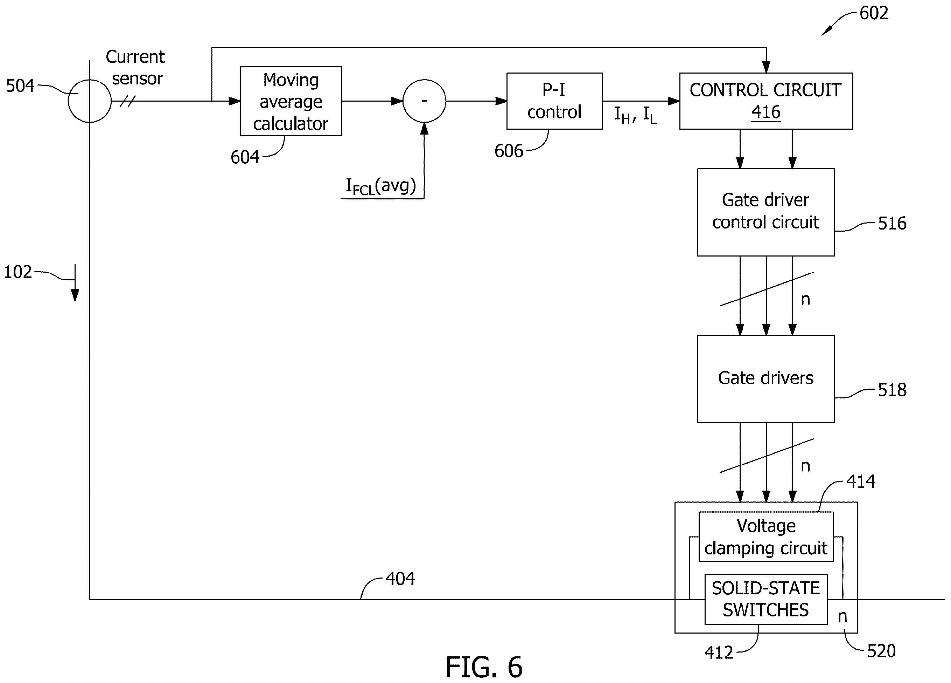

FIG. 6 depicts a block diagram of another adaptive current limiter 600 for current limiting fault current 102 in another exemplary embodiment. Another implementation of adaptive FCL control can be accomplished by calculating the average current after adaptive current limiter 600 enters current limiting mode. A moving average calculator 604 calculates the average of fault current 102 and compares it against an ideal value $I_{FCL}$ (avg). The error between the two is provided to a PI, PID, P, or a P-R type controller (shown as P-I controller 606 in FIG. 6) that adjusts the upper current band 104 and/or the lower current band 106 to bring the average current closer to the ideal value $I_{FCL}$ (avg). Control circuit 416 also monitors the $I_{peak}$ 210 and $I_{valley}$ 212 currents to ensure that $I_{peak}$ 210 falls within upper current band 104 and $I_{valley}$ falls within lower current band 106.

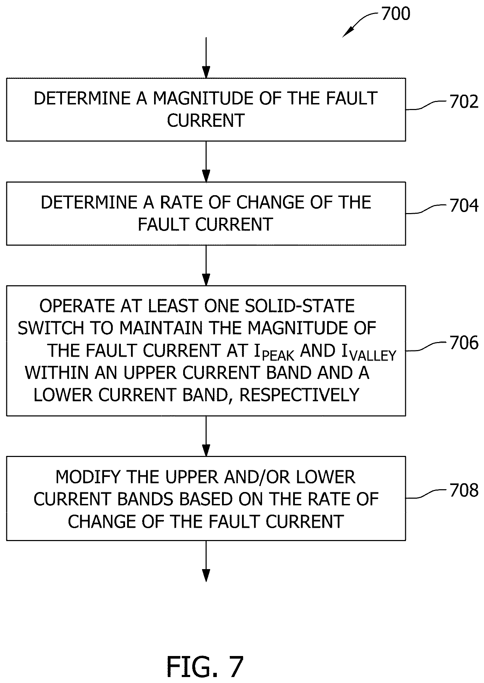

FIG. 7 is a flow chart of a method 700 operable by an adaptive current limiter for current limiting a fault current in an exemplary embodiment. Method 700 may be performed by one or more systems shown and described with respect to FIGS. 4-6.

Method 700 comprises determining 702 a magnitude of the fault current through the current path, determining 704 a di/dt of the fault current, and operating 706 at least one solid-state switch to selectively enable and disable a current path through at least one solid-state switch to maintain a magnitude of the fault current at $I_{peak}$ within an upper current band and the magnitude of the fault current at $I_{valley}$ within a lower current band. Method 700 further comprises modifying 708 the upper current band and/or the lower current band based on the di/dt of the fault current. For example, control circuit 416 (see FIG. 4) determines a magnitude of fault current 102 through current path 404 and determines a di/dt of fault current 102, using current sense circuit 410. Control circuit 416 operates solid-state switches 412 to selectively enable and disable current path 404 to maintain $I_{peak}$ 210 within upper current band 104 and $I_{valley}$ within lower current band 212 (see FIG. 2.). Control circuit 416 modifies upper current band 104 and/or lower current band 106 based on the di/dt of fault current 102, as previously described.

In some embodiments, method 700 further comprises modifying the upper current band and/or the lower current band based on a correction factor. For example, control circuit 416 (see FIG. 4) modifies upper current band 104 and/or lower current band 106 based on the correction factor, as previously described.

In some embodiments, the correction factor is based on a time delay associated with an operation of the adaptive current limiter to maintain the magnitude of the fault current at $I_{peak}$ within the upper current band and the magnitude of the fault current at $I_{valey}$ within the lower current band. For example, the correction factor is based on a time delay associated with an operation of control circuit 416 (see FIG. 4) to maintain the magnitude of fault current 102 at $I_{peak}$ 210 within upper current band 104 and the magnitude of fault current 102 at $I_{valley}$ 212 within lower current band 106 (see FIG. 2). In some embodiments, the correction factor varies based on the di/dt of the fault current, as previously described.

In some embodiments, method 700 further comprises decreasing the upper current band in response to the di/dt of the fault current increasing and positive and/or increasing the lower current band in response to the di/dt of the fault current decreasing and negative. For example, control circuit 416 (see FIG. 4) decreases upper current band 104 in response to the di/dt of fault current 102 increasing and positive and/or control circuit 416 increases lower current band 106 in response to the di/dt of fault current 102 decreasing and negative.

In some embodiments, method 700 further comprises calculating an average value of the magnitude of the fault current, determining a difference between the average value and a target average value of the magnitude of the fault current, and modifying the upper current band and/or the lower current band to reduce the difference. For example, control circuit 416 (see FIG. 4) calculates an average value of the magnitude of fault current 102, determines a difference between the average value and a target average value of the magnitude of fault current 102, and modifies the upper current band and/or the lower current band to reduce the difference.

An example technical effect of the apparatus and method described herein includes at least one of: (a) the upper and lower current bands are dynamically adjusted based on changes in the di/dt of the fault current, which improves the FCL control performance in view of variable fault locations and types; and (b) the dynamic adjustment of the upper and lower current bands ensures that downstream breakers will have sufficient current to trip during fault conditions.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1.   An adaptive current limiter (402, 502, 602) for current limiting a fault current, the adaptive current limiter comprising:

at least one solid-state switch (412) configured to selectively enable and disable a current path through the at least one solid-state switch;

a voltage clamping circuit (414) in parallel with the at least one solid-state switch;

a current sense circuit (410) configured to determine a magnitude of the fault current through the current path and a rate of change (di/dt) of the fault current; and

a control circuit (416) coupled with the current sense circuit and the at least one solid-state switch, the control circuit configured to:

> operate the at least one solid-state switch to selectively enable and disable the current path to maintain the magnitude of the fault current at $I_{peak}$ within an upper current band and the magnitude of the fault current at $I_{valley}$ within a lower current band; and
>
> modify the upper current band and/or the lower current band based on the di/dt of the fault current.

2. The adaptive current limiter of claim 1, wherein the control circuit is further configured to:

modify the upper current band and/or the lower current band based on a correction factor.

3. The adaptive current limiter of claim 2, wherein:

the correction factor is based on a time delay associated with an operation of the control circuit to maintain the magnitude of the fault current at $I_{peak}$ within the upper current band and the magnitude of the fault current at $I_{valley}$ within the lower current band, particularly wherein the correction factor varies based on the di/dt of the fault current.

4. The adaptive current limiter of any of claims 1-3, wherein the control circuit is further configured to:

> decrease the upper current band in response to the di/dt of the fault current increasing and positive; or
>
> increase the lower current band in response to the di/dt of the fault current decreasing and negative.

5. The adaptive current limiter of any of claims 1-4, wherein the control circuit is further configured to:

> calculate an average value of the magnitude of the fault current;
>
> determine a difference between the average value and a target average value of the magnitude of the fault current; and
>
> modify the upper current band and/or the lower current band to reduce the difference.

6. A method operable by an adaptive current limiter (402, 502, 602) for current limiting a fault current, wherein:

> the adaptive current limiter comprises:
>
> > at least one solid-state switch (412) configured to selectively enable and disable a current path through the at least one solid-state switch; and
> >
> > a voltage clamping circuit (414) in parallel with the at least one solid-state switch,
>
> the method comprising:
>
> > determining a magnitude of the fault current through the current path;
> >
> > determining a rate of change (di/dt) of the fault current;
> >
> > operating the at least one solid-state switch to selectively enable and disable the current path to maintain the magnitude of the fault current at $I_{peak}$ within an upper current band and the magnitude of the fault current at $I_{valley}$ within a lower current band; and
> >
> > modifying the upper current band and/or the lower current band based on the di/dt of the fault current.

7. The method of claim 6, wherein modifying the upper current band and/or the lower current band further comprises at least one of:

> modifying the upper current band and/or the lower current band based on a correction factor;
>
> decreasing the upper current band in response to the di/dt of the fault current increasing and positive; or
>
> increasing the lower current band in response to the di/dt of the fault current decreasing and negative.

8. The method of claim 6, wherein modifying the upper current band and/or the lower current band further comprises modifying the upper current band and/or the lower current band based on a correction factor, and wherein:
the correction factor is based on a time delay associated with an operation of the adaptive current limiter to maintain the magnitude of the fault current at $I_{peak}$ within the upper current band and the magnitude of the fault current at $I_{valley}$ within the lower current band, particularly wherein the correction factor varies based on the di/dt of the fault current.

9. The method of claim 6, further comprising:

calculating an average value of the magnitude of the fault current;
determining a difference between the average value and a target average value of the magnitude of the fault current; and
modifying the upper current band and/or the lower current band to reduce the difference.

10. A system for current limiting a fault current, the system comprising:

a solid-state circuit breaker, SSCB, (520) comprising at least one solid-state switch (412) configured to selectively enable and disable a current path through the SSCB and a voltage clamping circuit (414) in parallel with the at least one solid-state switch;
a control circuit (416) coupled with the SSCB and configured to:

operate the SSCB to selectively enable and disable the current path to maintain $I_{peak}$ of the fault current within an upper current band and $I_{valley}$ of the fault current within a lower current band; and
modify the upper current band and/or the lower current band based on a di/dt of the fault current.

11. The system of claim 10, wherein the system further comprises:

a current sensor (418, 504) configured to sense the magnitude of the fault current through the current path; and
a di/dt circuit (420, 506) configured to determine the di/dt of the fault current.

12. The system of claim 10 or 11, wherein the control circuit is further configured to:
modify the upper current band and/or the lower current band based on a correction factor.

13. The system of claim 12, wherein:
the correction factor is based on a time delay associated with an operation of the control circuit to maintain $I_{peak}$ of the fault current within the upper current band and $I_{valley}$ of the fault current within the lower current band.

14. The system of claim 13, wherein:
the correction factor varies based on the di/dt of the fault current.

15. The system of any of claims 10-14, wherein the control circuit is further configured to:

decrease the upper current band in response to the di/dt of the fault current increasing and positive; and
increase the lower current band in response to the di/dt of the fault current decreasing and negative.

FIG. 1

FIG. 2

EP 4 749 861 A1

FIG. 3A

FIG. 3B

FIG. 4

EP 4 749 861 A1

FIG. 5

EP 4 749 861 A1

FIG. 6

700

| DETERMINE A MAGNITUDE OF THE FAULT CURRENT | 702 |

| DETERMINE A RATE OF CHANGE OF THE FAULT CURRENT | 704 |

| OPERATE AT LEAST ONE SOLID-STATE SWITCH TO MAINTAIN THE MAGNITUDE OF THE FAULT CURRENT AT $I_{PEAK}$ AND $I_{VALLEY}$ WITHIN AN UPPER CURRENT BAND AND A LOWER CURRENT BAND, RESPECTIVELY | 706 |

| MODIFY THE UPPER AND/OR LOWER CURRENT BANDS BASED ON THE RATE OF CHANGE OF THE FAULT CURRENT | 708 |

FIG. 7

Europäisches
Patentamt
European
Patent Office
Office européen
des brevets

# EUROPEAN SEARCH REPORT

**Application Number**

EP 25 21 8719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/022680 A1 (BERGGREN BERTIL [SE] ET AL) 23 January 2014 (2014-01-23) * paragraphs [0066] - [0094]; figures 1-7, 11 * | 1-15 | INV. H02H9/02 H02H3/00 |
| A | CHAVAN GOVIND ET AL: "Coordination of Solid-State Circuit Breakers for DC Grids Under High-Fault-di/dt Conditions", 2022 IEEE ENERGY CONVERSION CONGRESS AND EXPOSITION (ECCE) IEEE, 9 October 2022 (2022-10-09), pages 1-5, XP034234757, DOI: 10.1109/ECCE50734.2022.9947849 [retrieved on 2022-11-30] * Sections III and IV; figures 2-7 * | 1-15 | |
| A | US 2022/085600 A1 (QI LI [US] ET AL) 17 March 2022 (2022-03-17) * paragraphs [0045] - [0052]; figures 1-6 * | 1-15 | |
| A | EP 3 694 068 B1 (GE ENERGY POWER CONVERSION TECHNOLOGY LTD [GB]) 18 October 2023 (2023-10-18) * paragraphs [0092] - [0104]; figures 1-11 * | 1-15 | **TECHNICAL FIELDS SEARCHED (IPC)** H02H |

The present search report has been drawn up for all claims

| Place of search | Date of completion of the search | Examiner |
|---|---|---|
| Munich | 18 March 2026 | Gomes Guerreiro, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                                    
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8719

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | Publication date | | Patent family member(s) | | Publication date |
|---|---|---|---|---|---|
| US 2014022680 A1 | 23-01-2014 | CN | 103403990 | A | 20-11-2013 |
| | | EP | 2684267 | A2 | 15-01-2014 |
| | | US | 2014022680 | A1 | 23-01-2014 |
| | | WO | 2012123014 | A2 | 20-09-2012 |
| US 2022085600 A1 | 17-03-2022 | CN | 114172139 | A | 11-03-2022 |
| | | EP | 3968477 | A1 | 16-03-2022 |
| | | US | 2022085600 | A1 | 17-03-2022 |
| EP 3694068 B1 | 18-10-2023 | EP | 3694068 | A1 | 12-08-2020 |
| | | US | 2022115863 | A1 | 14-04-2022 |
| | | WO | 2020164945 | A1 | 20-08-2020 |

EPO FORM P0459

For more details about this annex : see Official Journal of the European Patent Office, No. 12/82